# EUROPEAN PATENT APPLICATION

(11) **EP 4 621 554 A1**
(43) Date of publication of application: **24.09.2025**
(21) Application number: 24165643.8
(22) Date of filing: 22.03.2024
(51) Int. Cl.: G06F 8/30, G05B 19/042, G06N 5/04

(54) **A METHOD FOR GENERATING A CONTROL LOGIC CODE FOR CONTROLLING AN AUTOMATED INDUSTRIAL PROCESS**

(71) Applicant: ABB SCHWEIZ AG, 5400 Baden (CH)
(72) Inventor: GRUENER, Sten, 69514 Laudenbach (DE); KOZIOLEK, Heiko, 76227 Karlsruhe (DE); ASHIWAL, Virendra, 68542 Heddesheim (DE)
(74) Representative: Maiwald GmbH

(57) **Abstract**

A method (100) for generating a control logic code (134) for controlling an automated industrial process by means of at least one programmable logic controller is proposed, the method comprising:
Providing a plurality of specifications (111) of an appliance structure of the automated industrial process, comprising a plurality of components and/or subcomponents; and/or
Providing a plurality of functional requirements (111) of each component of the automated industrial process;
Transforming (121, 122, 123) the plurality of specifications (111) and/or the requirements (111) into a natural language form; wherein a semantic content of the plurality of specifications (111) and/or the requirements (111) are preserved;
Providing at least one control concept (113) related to the plurality of components and/or subcomponents for controlling the industrial process;
Generating (127) a prompt (135) for a first generative artificial intelligence model (140) configured for natural language processing based on the natural language form of at least parts of the plurality of specifications (111) of an appliance structure; and/or at least parts of the plurality of functional requirements (111) of each component of the automated industrial process; and the at least one control concept (113); and a task statement for control logic generation, for the first generative artificial intelligence model (140);
Providing the prompt (135) to the first generative artificial intelligence model (140); and
Generating the control logic code (134) for performing the automated industrial process by means of the first generative artificial intelligence model (140) based on the prompt (135) as provided.

## Description

### Background

Creation of control logic for controlling an automated industrial process requires processing of complex requirements, which are specified, e.g. in form of P&IDs, I/O tables or control narratives. This task is typically performed by automation engineers manually interpreting provided requirement specifications, selecting appropriate process equipment, instrumentation, controllers for writing control logic code.

The requirements are typically specified by engineering, procurement, and construction contractors (EPCs) before being handed over to the automation engineers and follow certain standard notations.

### Detailed description of the invention

Generative artificial intelligence (Al), which can be based on large language models (LLM) can support generating control logic source code and therefore can save manual programming efforts. However, a large language model is queried using prompts including natural language requirements that can define the control logic source code to be generated. Requirements for automating industrial processes of large production facilities, based on piping-and-instrumentation diagrams (P&IDs), input/output (I/O) tables, and/or control concepts, which e.g. can be formulated as control narratives, can be complex and can be partially formulated using natural language. A significant part of the requirements is typically expressed using verbose data formats, which can be machine-readable, and consequently cannot be used directly as input for a LLM, since LLMs are limited in respect to an amount of input information, which can be counted as a token limit.

It can be a responsibility of an automation engineer to interpret requirement documents. This process can be laborious and can lead to human errors due to oversight or cognitive complexity. Therefore, a method for generating a control logic code is highly desired and could significantly improve engineering efficiency.

Recently, generative AI in form of large language models (LLM) made significant technological advances and became widely available for end users. Tests have shown that generative AI can generate control logic source code (e.g., in programming languages defined in IEC 61131-3) by querying it using requirements formulated in natural language. Taking P&IDs, I/O list, and control narratives as input for generative AI is therefore a potential solution to generate source code.

However, currently available AI is limited by input token limits, so that queries need to be formulated with certain size restrictions. A variant of the most advanced generative AI (GPT-4) is capable of processing up to 32.000 input tokens, which corresponds approximately to 25.000 words.

The data contained in 100s of P&IDs, as well as I/O lists with more than 5000 entries, or control narratives that span dozens of pages for a typical automation project of text easily surpasses these input limits.

While it is possible in many cases to partition the requirements into individual parts that can be processed by separate generative AI queries, even the requirements stated within a single P&ID page may often surpass the token limit and carry interdependencies with other parts of the requirements that affect the required control logic source code.

Accordingly, the present invention is directed to a method for generating a control logic code for controlling an automated industrial process by means of at least one programmable logic controller, a method for building a controller, a controller, and a use of a meta-language as described in the independent claims.

Advantageous modifications of the invention are stated in the dependent claims.

All combinations of at least two of the features disclosed in the description, the claims or the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for generating a control logic code for controlling an automated industrial process by means of at least one programmable logic controller, the method comprising the following steps. In a step of the method, a plurality of specifications of an appliance structure of the automated industrial process, comprising a plurality of components and/or subcomponents is provided. Alternatively or additionally, in a further step, a plurality of functional requirements of each component of the automated industrial process is provided. In a further step, the plurality of specifications of an appliance structure of the automated industrial process, comprising a plurality of components and/or subcomponents; and/or the functional requirements of each component of the automated industrial process, are transformed into a natural language form, wherein a semantic content of the plurality of specifications and/or the requirements are preserved by the transforming. In a further step, at least one control concept related to the plurality of components and/or subcomponents for controlling the industrial process is provided for the method. In a further step, a prompt for a first generative artificial intelligence model configured for natural language processing based on the natural language form is generated, based on at least parts of the plurality of specifications of an appliance structure; and/or based on at least parts of the plurality of functional requirements of each component of the automated industrial process; and based on the at least one control concept; and based on a task statement for control logic generation, for the first generative artificial intelligence model. In a further step, the prompt is provided to the first generative artificial intelligence model. In a further step, the control logic code for performing the automated industrial process is generated by means of the first generative artificial intelligence model based on the prompt as provided.

The control logic code can be a computer program comprising instructions, which, when the computer program is executed by a computer and/or a programmable logic controller (PLC), cause the computer and/or the PLC to execute the instructions. The control logic code can be coded based on a control code programming language, as e.g., IEC 61131-3, IEC 61499, and/or based on Modelica, or MATLAB/Simulink and/or based on a general-purpose programming language, as e.g., Python, or C#.

The automated industrial process can apply intelligent technology to industrial processes to replace manual, mundane, repetitive tasks with highly efficient and/or automated workflows. This can overcome tasks for plant operators to physically and manually monitor performance values and quality of output for determining the best settings to run production equipment and/or production components, particularly including subcomponents. The automated industrial process can be based on a usage of sensors, automatic control devices, computer technology and software engineering to simplify and manage these tasks. Data can be collected through thousands of sensors at different locations throughout the facility. Related information can be stored and analyzed using a computer device. Every process and machine can be monitored and controlled on a large screen in a control room.

A control concept can be described by at least a part of a control narrative and/or control information contained within a P&ID diagram and include a specification of sequential control and/or feedback control of individual parts of an industrial process and/or of a comprehensive industrial processes.

The generative artificial intelligence model, which is configured for natural language processing, can be a large language model (LLM), e.g., LLAMA, GPT, or Bard. Such a large language model can be a type of language model, which is based on artificial neural network and trained, e.g., instruction-tuned, on a vast amount of general-purpose knowledge. The generative artificial intelligence model can be configured to output answers an input user queries. The answers provided can include textual explanations or formal computer-processable code, e.g., in a notation used by a programmable logic controller.

The generative artificial intelligence model can additionally or alternatively be a custom-trained model configured for industrial automation or a fine-tuned general purpose LLM. The LLM can be fine-tuned based on available control logic code or generated from scratch (self-supervised way) using available simulation code snippets. The fine-tuning can be performed by available control logic code, which is linked to specifications of applicant's structures, comprising a plurality of components, and/or a plurality of functional requirements of each component of the automated industrial process.

The plurality of specifications of an applicant's structure of the automated industrial process, which can comprise a plurality of components and/or subcomponents, and/or the plurality of functional requirements of each component of the automated industrial process, can be based on a project context. The project context can be described by comprising documents and specifications about a particular automation-engineering project and/or an automated industrial process. For example, such documents can be requirements specifications, control narratives, contracts, design specifications, domain-specific textbooks, engineering handbooks, and/or other documents that can help to understand details about the intended industrial production process. For example, for an automation-engineering project for a chemical plant producing a specific kind of chemical substance, the documents of the project context can have detailed information about the ingredients used, the dimensions of the equipment, and the intended procedures, as e.g., mixing, boiling, reacting, etc. This can also include piping-and-instrumentation diagrams (P&ID), process flow diagrams (PFD), and/or system control diagrams (SCD), for example. When the process has already been operating, the context can also include historical data, such as time series measurements and alarms and events.

Topological information about the production process and instrumentation requirements for automation can be specified using P&I diagrams, which can be provided and received in structured file formats, e.g. according to the DEXPI or the ISO15926 standard. Types of input and output signals for automation can be specified using input/output (I/O) lists, which are often large spreadsheets, where inputs and outputs are specified with various attributes, e.g., analog/digital, ranges, etc. A control concept or automation concept can be specified using a so-called control narrative, a plain text document written in a technology/vendor agnostic way, describing the automation requirement in prose. Based on these requirement artifacts or documents, the automation of the industrial process can be defined and can be specified as described by IEC 61131-3 or IEC 61499.

Generating the prompt can be based on templates for prompt generation, wherein the templates are associated to category of tasks for control code generation. Based on a tasks statement the prompt can be generated by selected templates of prompts, which are related to the task. The prompt can be augmented by chunks of the plurality of specifications of an appliance structure of the automated industrial process, and/or the plurality of functional requirements of each component of the automated industrial process. The chunks of the plurality of specifications and/or functional requirements can be selected by a similarity search, which is based on embeddings of the plurality of specifications and/or functional requirements and embeddings of the prompt.

A database can be used for storing embeddings of the plurality of transformed specifications of an appliance structure of the automated industrial process, and/or embeddings of the plurality of transformed functional requirements of each component of the automated industrial process. The embeddings of the plurality of specifications and/or functional requirements can be stored by means of a vector database for performing the similarity search based on the embeddings.

Advantageously, the method for generating the control logic controller can support a generation of the control logic code by means of the generative artificial intelligence model, particularly including an implicit or explicit compression and/or implicit or explicit summarization of the requirement artifacts, and/or an implicit search of requirement artefacts, which are relevant for controlling the automated industrial process. This vastly expands the possibilities for control logic code generation and can significantly save manual engineering efforts. Additionally or alternatively, generating control logic code using algorithms can improve the quality of the generated control logic code.

According to an aspect, the plurality of the specifications of the appliance structure; and/or the plurality of the functional requirements of each component, can be transformed by means of a structured transforming process in such a way, that a semantic content of each of the plurality of specifications of the appliance structure, and/or each of the plurality of functional requirements of each component are preserved, and an amount of data of each of the plurality of specifications of the appliance structure, and/or each of the plurality of functional requirements of each component, is reduced with respect to the structured computer readable form of each of the corresponding specifications and/or functional requirements, as provided. The structured transforming process can be configured to search for control relevant parts of the plurality of the specifications of the appliance structure; and/or the plurality of the functional requirements of each component, to reduce the respective amount of data, which are particularly provided to the first generative artificial intelligence model.

Advantageously, the method for generating a control logic code can compress requirement artefacts based on the structured transforming process to overcome the size limit in respect to an amount of data provided to the first generated artificial intelligence model, by selecting relevant parts of the requirement artefacts based on the structured transforming process. Based on the described method for generating control logic code, relevant parts of the specifications and/or the requirements and/or the requirement artefacts can be included in queries to the first generative artificial intelligence model, respectively large language model, for control logic code generation, even if a size limit for an input of the first generated artificial intelligence model has to be complied with.

According to an aspect, the plurality of specifications of the appliance structure and/or the plurality of functional requirements of each component are provided in a structured computer readable form.

Favorably, this enables an automatic generation of control logic code with high quality, because the specifications and/or the requirements can be transformed into a natural language form unambitiously.

According to an aspect, the method comprises the step of providing a description of a meta-language syntax for the plurality of specifications of the appliance structure and/or the plurality of the functional requirements of each component, wherein the meta-language syntax is based on natural language. In a further step the plurality of the specifications of the appliance structure and/or the plurality of the functional requirements of each component are transformed into a natural language form, based on the meta-language syntax, wherein the semantic content of at least a part of the plurality of the specifications of the appliance structure and/or at least a part of the plurality of the functional requirements of each component are preserved.

A topology of the automated industrial process, as an example of a requirement artefact, can be provided by P&I diagrams, which are typically described by a verbose notation, as e.g., XML as defined by the DEXPI P&ID specification.

Because P&IDs are not only used for control logic generation but for various other tasks, as e.g., spatial planning, process graphics creation, etc., they can contain a lot of information that is not needed for control logic generation. Such additional information pertains for example to graphical coordinates that are needed for drawing but not for control logic implementation. For control logic code generation topological dependencies of different sensors and actuators are relevant, for example to implement the control logic for interlocks.

I/O lists can be provided in form of tables containing I/O descriptions in terms of rows where following columns are included, e.g., I/O number, Tag number, Loop number, P&ID number, location, I/O type, calibration limits, set points, engineering units, value range, etc.

Since an I/O table already contains a set of condensed information, the possible reduction should be user definable, where redundant parts of the I/O list should be omitted, e.g., the running number column.

An additional enhancement can be to provide a guidance to the first generated artificial intelligence model, how to interpret I/O signal names, for example based on tag name definitions of IEC 62424 "if signal name starts with P" it means that it is connected to a "pressure" measurement.

The meta-language syntax can be configured to compress and condense the plurality of specifications of the appliance structure and/or the plurality of functional requirements of each component of the automated industrial process, respectively the requirement artefacts, provided as an input to the first generated artificial intelligence model, by executing specific model transformations that strip out data irrelevant for control logic generation and use a condensed notation. Large automation requirements documents can be fed as prompts to generative Al, which then in turn can generate the control logic source code.

The meta-language syntax for, particularly compressing, requirement artefacts can comprise an introduction part, for defining the meta-language syntax, which is not related to a specific requirement artefact, and an encoded part based on the meta-language syntax, wherein the encoded part is specific for the specifications of the appliance structure and/or the functional requirements of each component. Additionally, the meta-language syntax can include a conclusion part, which is also based on the meta-language syntax and can include specific data like generic "common" equipment relations.

The transformation of the requirement artefacts, as for instance P&ID diagrams and/or I/O lists and/or control narratives, including at least one control concept, based on the meta-language syntax, can be performed by mapping a first plurality of meta-language elements to structure elements of the provided structured computer readable form of the plurality of the specifications of the appliance structure; and/or by mapping a second plurality of meta-language elements to structure elements of the provided structured computer readable form of the plurality of the functional requirements of each component. The structure elements of the requirement artefacts to be mapped to meta-language elements can be selected to preserve the semantic context of the requirement artefacts and/or to reduce an amount of data of the requirement artefacts.

Using other words, the transforming of the plurality of specifications and/or requirements into the natural language form can comprise mapping rules, particularly based on a meta-language syntax, wherein the semantic context of the requirement artefacts including the specifications and/or functional requirements are preserved. This transforming can reduce the amount of data of each of the requirement artefacts, particularly by selecting parts of the requirement artefacts relevant for generation of the control logic code, particularly by the syntax of the meta-language.

Advantageously the use of a meta-language syntax for transforming the plurality of specifications and/or requirements into a natural language form can structure the transforming process and reduce the amount of data to be provided to the first generated artificial intelligence model for generating the control logic code.

According to an aspect, an amount of data of each of the plurality of the specifications of the appliance structure, as transformed based on the meta-language syntax; and/or each of the plurality of the functional requirements of each component, as transformed, based on the meta-language syntax, is reduced with respect to the structured computer readable form of each of the specifications and/or the functional requirements as provided.

Favorably, transformation of the plurality of specifications and/or requirements into a natural language form using a meta-language syntax can compresses automation requirement artifacts to overcome the size limit, so that relevant parts of the requirements, as selected based on the meta-language syntax, can be included in the queries to the first generative artificial intelligence model for code generation. This vastly expands the possibilities for control logic code generation and significantly saves manual engineering efforts.

Using other words, the method for generating the control logic code can overcome an input token limit, as measure for a input data limit, of a generative artificial intelligence model in the context of process automation requirements, using the meta-language, so that the semantics of the plurality of specifications and/or the requirements are preserved, but their data size is decreased significantly. This reduction in respect to the data size can be necessary because still most current and probably future generative artificial intelligence models or LLMs are limited by the number of input tokens. The proposed method for generating the control logic code can reduce energy and/or costs because the generative artificial intelligence models or LLMs can cope with larger inputs in the future.

Additionally or alternatively, usage of token-limited on-premises LLM models can be more cost-efficient and sustainable compared to generic cloud-available models like GPT-4.

According to an aspect, the plurality of the specifications of the appliance structure; and/or the plurality of the functional requirements of each component; which are transformed based on the meta-language, comprise an introduction part, for defining the meta-language syntax; and an encoded part, which is specific for the specifications of the appliance structure; and/or the functional requirements of each component.

According to an aspect, the meta-language syntax is configured to preserve the semantic content of the plurality of the specifications of the appliance structure and/or the plurality of the functional requirements of each component, by mapping the first plurality of meta language elements to structure elements of the provided structured computer readable form of the plurality of the specifications of the appliance structure; and/or by mapping a second plurality of meta language elements to structure elements of the provided structured computer readable form of the plurality of the functional requirements of each component.

According to an aspect, the transformation, based on the meta-language syntax, is performed successively for any object class as included in the plurality of the specifications of the appliance structure and/or the plurality of the functional requirements of each component.

According to an aspect, respective parts of the transformation by the object classes are concatenated for transforming the plurality of the specifications of the appliance structure; and/or the plurality of the functional requirements of each component into a natural language form.

According to an aspect, the plurality of the specifications of the appliance structure; and/or the plurality of the functional requirements of each component, which are the transformed, based on the meta-language syntax; and/or which are provided in a structured computer readable form, are partitioned into a plurality of respective subunits, to generate a plurality of chunks of the plurality of the specifications of the appliance structure; and/or to generate a plurality of chunks of the plurality of the functional requirements of each component, whereby the respective chunks feature a corresponding smaller data size as each of the related specifications of the appliance structure; and/or each of the related functional requirements of each component, respectively.

Particularly, the P&ID diagrams or other requirement artefacts can be partitioned in a plurality of respective subunits by building a plurality of chunks of the P&ID diagrams or the other requirement artefacts, wherein the plurality of chunks can include chapters, sections, pages and/or individual statements of the P&ID diagram or the other requirement artefacts, and particularly to treat them independently of each other. The resulting plurality of chunks can be based on different levels of abstraction of the P&ID diagram or the other requirement artefacts. Embeddings of these chunks can be stored by means of vector database, particularly for the similarity search.

I/O lists can be provided to the first generative artificial intelligence model completely, without any transformation.

A first alternative can be, that the parts of the I/O lists, which are selected by the similarity search with a statement of the prompt is used to augment the prompt.

A second alternative can be that I/O lists are transformed into a plurality of subunits based on logical grouping rules, wherein the logical grouping rules are provided to the first generated artificial intelligence model by means of the augmented prompt together with at least parts of the I/O lists. An example of a logical grouping rule is for instance: "all tags contained in one control loop should be considered a chunk". In this case the control loop can mean an intended logical dependency between a sensor and an actuator indicated, e.g., in the P&ID or control narrative. For example, if the measurement value of a pressure sensor "PI40" influences the opening of the analog valve "V50", they are in the same control loop and should be always part of one information chunk, i.e., always be jointly part of any LLM query.

Control narratives can be transformed by partitioning the control narratives into a plurality of respective subunits building a plurality of chunks of the control narratives, wherein the plurality of chunks can include chapters, sections, pages and/or individual statements of the control narratives, and particularly to treat them independently of each other.

Additionally or alternatively, different kinds of descriptions of the control narrative, as for instance HMI descriptions or PAC descriptions, can be treated independently of each other in respect to augmenting the prompt.

Additionally or alternatively, control narrators and/or chunks of the control narrators can be summarized using a generator is artificial intelligence model, which particularly can be different to the first generative artificial intelligence model.

According to an aspect, the plurality of specifications of the appliance structure; and/or the plurality of the functional requirements of each component, which are transformed, based on the meta-language syntax; and/or which are provided in a structured computer readable form, are compressed in respect to their data size based on a summarization, which is performed by means of a second generative artificial intelligence model configured for natural language processing.

Particularly, the second generative artificial intelligence model can be the same as the first generative artificial intelligence model.

Because of a high importance of the control narratives for generating the control logic code, the summarization can be performed by a prudent definition of the summarization, taking into account to remove pre-defined 'parasite' words like "likely" or "mostly" and/or by applying abbreviations where possible, e.g., replacing "for example" by "e.g." and/or by introducing of abbreviations for multiple repeating terms, as e.g. P&ID for common terms and/or by summarization, which is based on keywords. A list of main keywords can be provided to first generated artificial intelligence model before feeding any control narratives. Based on the keywords, the first generative artificial intelligence model can pay attention parts of the texts in the vicinity of the keywords. For example, a tag name as part of a control narrative can bring a focus to the tag name, to accomplish that interlocks or logic statements in the vicinity of the tag name can be taken into account for an output of the first generated artificial intelligence model.

Particularly, summarization performed by a generative artificial intelligence model can be supervised by an operator by means of a graphical user interface, to release the result of the performed summarization of the control narrators for further processing by the first generative artificial intelligence model.

According to an aspect, the prompt is generated, based on a provided natural language form of a plurality of input/output descriptions of at least a part of the components and/or subcomponents; and/or wherein the prompt is generated, based on a provided natural language form of control narratives, comprising a plurality of control concepts assigned to the components and/or subcomponents for controlling the industrial process.

According to an aspect, the method comprises the step of generating a first plurality of embeddings of at least parts of the plurality of the chunks of the plurality of the specifications of the appliance structure, by means of a third generative artificial intelligence model configured for natural language processing. In a further step, a second plurality of embeddings of at least parts of the plurality of the chunks of the plurality of the functional requirements of each component is generated, by means of a fourth generative artificial intelligence model configured for natural language processing. In a further step, the first plurality of the embeddings; and/or the second plurality of the embeddings are stored, by means of a database. And in a further step, the prompt for the first generative artificial intelligence model configured for natural language processing is augmented, by adding matching chunks of the plurality of the chunks of the specifications of the appliance structure; and/or by adding matching chunks of the plurality of the chunks of the functional requirements of each component, wherein performing the matching is based on a similarity search performed by means of the database.

The database can comprise, a vector database being a specialized database designed to efficiently store, search, and manage high-dimensional vector data, often used in applications like machine learning, image and voice recognition, and similarity searches. These databases enable rapid nearest neighbor search operations, allowing users to quickly identify vectors in the database that are most like a given input vector. The vector databases can be a FAISS database, which is developed by Facebook AI or an Annoy database, which is developed by Spotify or a Pinecone database.

Embeddings can be a concept in the world of machine learning and artificial intelligence, predominantly in the realm of deep learning. It allows for the conversion of categorical data, such as words or items, into vectors of continuous numbers. Embeddings can capture and underlying semantics and relationships between different categories, which can improve the performance of machine learning models. Embeddings can be learned from large datasets and particularly they can be available for use in other tasks without the need for training from scratch.

Embeddings of a requirement artefacts and/or a prompt can be generated by means of a generative artificial intelligence model, e.g., an LLM model, to create an embedding representation of the input text, typically as a vector of numbers, wherein the requirement artefacts and/or chunks of the requirement artefacts can be pre-processed by a transformation as described above.

Using other words, the embeddings are representations of values or objects like text, images, and audio that are designed to be consumed by machine learning models and semantic search algorithms.

The similarity search can be performed by comparing the first and/or the second plurality of embeddings stored in the vector database, with an embedding of at least the one control concept related to the plurality of components and/or subcomponents for controlling the industrial process; and/or with embeddings of other control concepts of the control narrative, wherein the embeddings of the control concepts are stored in the vector database, too. The matching chunks can be retrieved from the database, too, and be added to a particular prompt.

The similarity search based on embeddings and augmenting the prompt can be performed according to an embedding retrieval method.

This augmented prompt can be sent to the first generative artificial intelligence model, respectively the LLM, for control logic code generation.

Because a potential amount, and a corresponding data volume, of requirement artifacts is quite large, the partitioning of the plurality of the specifications of the appliance structure and/or the plurality of the functional requirements of each component, which can be combined with the embedding retrieval method, and/or can be combined with the transforming of the plurality of the specifications, and/or combined with the functional requirements by means of the meta-language syntax can sufficiently reduce the data size of the prompt to not exceed the token limit of the first generators artificial intelligence model.

According to an aspect, the method comprises a step of editing and/or amending and/or changing, performed by an operator by means of an interface:
- the generation of the prompt for the first generative artificial intelligence model; and/or
- the mapping the first plurality of meta-language elements to structure elements of the provided structured computer readable form of the plurality of the specifications of the appliance structure; and/or
- the mapping a second plurality of meta-language elements to structure elements of the provided structured computer readable form of the plurality of the functional requirements of each component; and/or
- the partitioning of the plurality of the specifications of the appliance structure to generate a plurality of chunks of the plurality of the specifications of the appliance structure; and/or
- the partitioning of the plurality of the functional requirements of each component to generate a plurality of chunks of the plurality of the functional requirements of each component; and/or
- the compression, based on a summarization, of the plurality of specifications of the appliance structure; and/or
- the compression, based on a summarization, of the plurality of the functional requirements of each component.

By editing and/or amending and/or changing a plurality of steps of the method for generating a control logic code, an automation engineer can supervise the generation of the control logic code but is relieved from manual coding control logic. Furthermore, the automation engineer has a high level of control of the "summarization" of engineering artifacts, by deciding which artifacts are participating in the code generation process, making the resulting code more explainable. Because chunks of the requirement artefacts, proposed to be used by the method, are included and/or documented by the proposed prompt and hence can be proved and communicated to an end-user.

Using other words, the proposed method to generate control logic code is user-guided and/are user-assisted and can require user-input for the summarization process. This user-assisted method can be effective for generating the control logic code. Additionally or alternatively, the method to generate the control logic code is supervised and explainable to an end-user for increasing an acceptance of potential users. The methodology to transform the requirement artefacts by using the meta-language syntax can improve a speed and effectivity to generate the control logic code.

A method for building a controller for controlling an automated industrial process is proposed, comprising the step of generating a control logic code for controlling an automated industrial process by means of at least one programmable logic controller as described above. In addition, in a further step, the control logic code is loaded to a programmable logic controller, and can particularly include a compilation step, i.e., converting control logic code into an executable format to be run on the controller's CPU.

A controller is proposed, with a programmable logic controller, and a database and an interface. The database is coupled to the programmable logic controller. The interface is signally coupled to the programmable logic controller. Additionally, the interface is configured to be signally coupled to a plurality of components and/or subcomponents of an automated industrial process system. In addition, the controller is configured to control the automatic industrial process, based a control logic code, which is generated by any of the methods described above.

A coding-device is propose for generating a control logic code, wherein particularly the control logic code is configured for controlling an automated industrial process by means of at least one programmable logic controller. The coding-device comprises a first interface, a data processing apparatus and a second interface.

The first interface is configured for receiving a plurality of specifications of an appliance structure of the automated industrial process; wherein particularly the appliance structure comprise a plurality of components and/or subcomponents. Alternatively or additionally, the first interface is configured for receiving a plurality of functional requirements of each component of the automated industrial process. Alternatively or additionally, the first interface is configured to receive at least one control concept related to the plurality of components; and/or particularly related to the plurality of subcomponents for controlling the industrial process.

The data processing apparatus is signally coupled to the first interface and the second interface. The second interface is configured to be coupled to a first generative artificial intelligence model configured for natural language processing. The coding-device comprises means and/or the coding device is configured, particularly by means of the data processing apparatus, to carry out one of the methods according to any one of the methods as described above.

The coding-device can be a part of a control-programming environment.

A coding-device system is propose, comprising: the coding-device described above and the first generative artificial intelligence model configured for natural language processing.

A use of a meta-language for transforming the specifications of the appliance structure and/or the functional requirements of each component into a natural language form is proposed, wherein the semantic content of the specifications of the appliance structure and/or the functional requirements of each component are preserved, for generating a control logic code for controlling an automated industrial process, according to any of the methods as described above.

According to an aspect, the method for generating a control logic code for controlling an automatic industrial process can be a computer implemented method, wherein the computer program comprises instructions which, when the computer program is executed by a computer and/or a programmable logic controller (PLC), cause the computer and/or the PLC to execute the instructions and/or the steps of the method for generating a control logic code.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- FIG. 1: a data flow diagram of a method to generating a control logic code;
- FIG. 2: a schematic meta-language syntax;
- FIG. 3: a schematic meta-language syntax of a plurality of object classes;
- FIG. 4: a schematic information flow of a method to generating a control logic code; and
- FIG. 5 to 10: example pages of a user interface of a method to generating a control logic code.

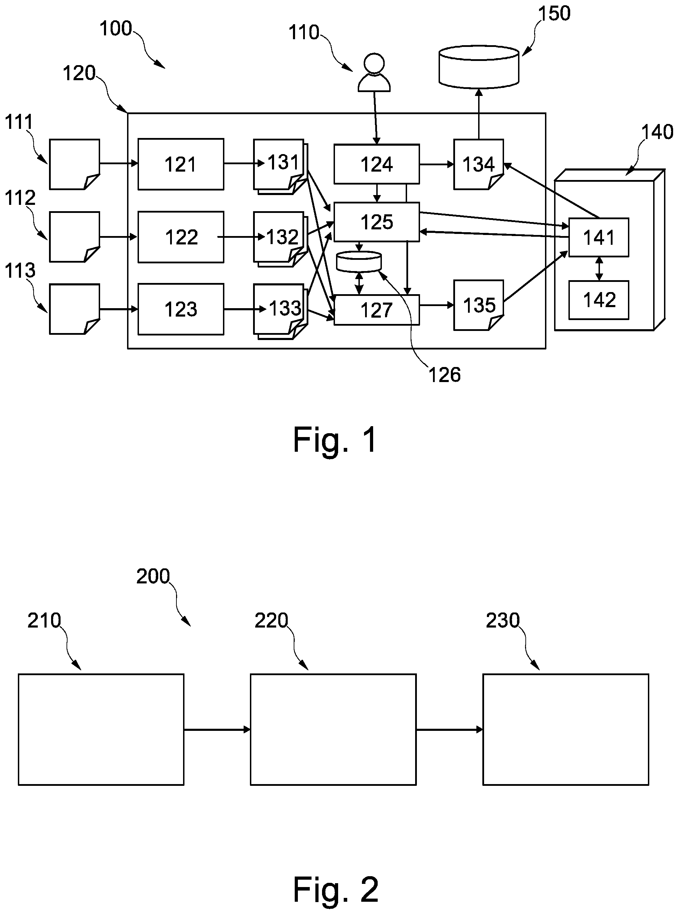

Figure 1 sketches schematically a data flow diagram 100 of a method for generating a control logic code for controlling an automated industrial process by means of at least one programmable logic controller, wherein the automated industrial process comprises an appliance structure including a plurality of components and/or subcomponents.

An architecture of a control logic generator 120, which is sketched in figure 1, can be configured to execute the method and can comprise a model transformer 121, 122, 123, a prompt generator 127, an embeddings encoder 125, a vector database 126 , and a user interface 124. The control logic generator 200 can be configured to be provided by input documents 111, 112, 113 containing automation requirements. The control logic generator 200 can be configured to query an application programming interface (API) 141 of a first generative artificial intelligence model 140 configured for natural language processing, which can be based on the large language model 142, by a prompt to generate control logic source code, providing the generated control logic code in a repository 150, from which it can be retrieved, interpreted, compiled, deployed, and finally be executed. The control logic generator 120 can be configured to perform a search based on the provided automation requirements to identify relevant parts of the automation requirements for generating an augmented prompt including the searched parts of the automation requirements. The control logic generator 120 can be configured to provide the augmented prompt and a task statement for control logic generation to the first generative artificial intelligence model for a query. The search for relevant parts of the automation requirements can, e.g., be performed by a generative artificial intelligence model, based on embeddings of the prompt and/or embeddings of automation requirements and/or requirement artefacts. The generative artificial intelligence model for the search can be different to the first generative artificial intelligence model.

In a first step of the method for generating a control logic code for controlling an automated industrial process by means of at least one programmable logic controller, a plurality of specifications of an appliance structure of the automated industrial process; and/or a plurality of functional requirements of components and/or subcomponents of the automated industrial process are provided by means of a computer readable P&ID diagram 111, which is structured as a computer readable XML-file.

In a further step 121, the plurality of specifications and/or the requirements 100 are transformed into a natural language form, wherein a semantic content of the plurality of specifications and/or the requirements are preserved.

Alternatively or additionally in step 121, the plurality of the specifications of the appliance structure and/or the plurality of the functional requirements of each component into a natural language form can be transformed, based on a meta-language syntax, wherein the description of the meta-language syntax is based on natural language and provided to the method, and particularly wherein an amount of data of each of the plurality of the specifications of the appliance structure, as transformed based on the meta-language syntax; and/or each of the plurality of the functional requirements of each component, as transformed, based on the meta-language syntax, is reduced with respect to the structured computer readable form of each of the specifications and/or the functional requirements as provided.

Additionally or alternatively, in step 121 the plurality of the specifications of the appliance structure; and/or the plurality of the functional requirements of each component, which are transformed, based on the meta-language syntax; and/or which are provided in a structured computer readable form, are partitioned into a plurality of respective subunits, to generate a plurality of chunks of the plurality of the specifications of the appliance structure; and/or to generate a plurality of chunks of the plurality of the functional requirements of each component, whereby the respective chunks feature a corresponding smaller data size as each of the related specifications of the appliance structure; and/or each of the related functional requirements of each component, respectively.

In a further step 123 of the method, at least one control concept 133, which is related to the plurality of components and/or subcomponents for controlling the industrial process is provided, e.g. by means of a plain text describing a control narrative 113 for the automated industrial process.

In a further step 127 of the method, a prompt 135 for a first generative artificial intelligence model 140 configured for natural language processing is generated, based on the natural language form of at least parts of the plurality of specifications of an appliance structure; and/or at least parts of the plurality of functional requirements of each component of the automated industrial process 131; and the at least one control concept 133. A task statement for the control logic generation for the first generative artificial intelligence model is added to the prompt 135.

In a further step, the prompt 135 is provided to the first generative artificial intelligence model 140, which can comprise an API 141 for the first generative artificial intelligence model 140 including a large language model 142.

In a further step, the generated control logic code 134 for performing the automated industrial process is provided by means of the first generative artificial intelligence model 140 based on the prompt 135.

Additionally, the generated prompt 135 can be amended by a natural language form 132 of a plurality of input/output descriptions 112 of at least a part of the components and/or subcomponents, which is provided by a process step 122. This can closer define the appliance structure of the automated industrial process for an improved control.

Additionally, the generated prompt 135 can be amended, based on a provided natural language form of control narratives 113, comprising a plurality of control concepts assigned to the components and/or subcomponents for controlling the industrial process, wherein the natural language form can be provided by a process step 123. This can closer define the automated industrial process for an improved control.

In a further step 125, a first plurality of embeddings of at least parts of the plurality of the chunks of the plurality of the specifications of the appliance structure can be generated, by means of a third generative artificial intelligence model configured for natural language processing.

Additionally or alternatively, in step 125 a second plurality of embeddings of at least parts of the plurality of the chunks of the plurality of the functional requirements of each component can be generated, by means of a fourth generative artificial intelligence model configured for natural language processing. The first, second, third and/or fourth generative artificial intelligence model can be the same generative artificial intelligence model or they can be partially a same generative artificial intelligence model.

In a further step, the first plurality of the embeddings; and/or the second plurality of the embeddings, can be stored by means of a database 126. The prompt 135 can also be stored by the database 126, particularly for a similarity search.

In a further step, the prompt 135 to be provided to the first generative artificial intelligence model 140 and configured for natural language processing can be augmented, by appending or adding matching chunks of the plurality of the chunks of the specifications of the appliance structure, and/or by matching chunks of the plurality of the chunks of the functional requirements of each component with at least the one control concept related to the plurality of components and/or subcomponents for controlling the industrial process. The matching of the chunks is based on a similarity search performed by means of the database, wherein the similarity search is performed using at least stored embeddings of at least the one control concept related to the plurality of components and/or subcomponents for controlling the industrial process and embeddings of the plurality of the chunks of the specifications of the appliance structure, and/or the plurality of the chunks of the functional requirements of each component.

Figure 2 sketches schematically a meta-language syntax, as a base for transforming the plurality of the specifications of the appliance structure; and/or the plurality of the functional requirements of each component.

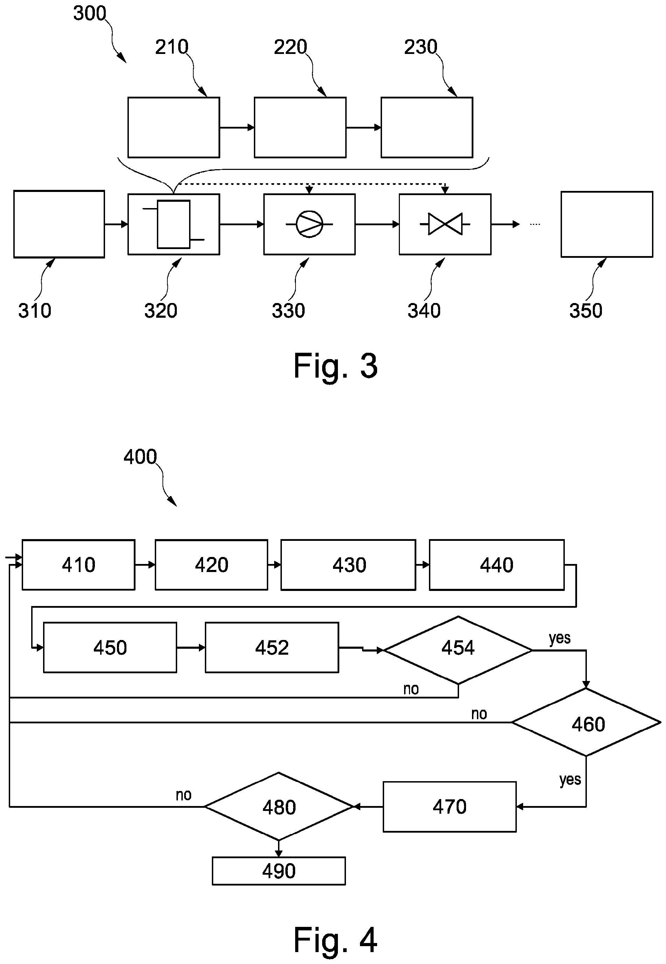

The meta-language syntax for each object type can comprise an introduction part 210, for defining the meta-language syntax and an encoded part 220 based on the meta-language syntax, wherein the encoded part 220 is specific for the specifications of the appliance structure and/or the functional requirements of each component. Additionally, the meta-language syntax can include a conclusion part 230, which is also based on the meta-language syntax and can include specific data like generic "common" equipment relations. An example for such a transformation will be given with reference to figure 3.

Figure 3 sketches schematically a scheme 300 for a transformation of requirement artifacts including a plurality of object classes by means of the meta-language syntax, wherein the transformation is configured to preserve the semantic content of the requirement artefacts. The requirement artefacts can include a plurality of specifications of an appliance structure of the automated industrial process, comprising a plurality of components and/or subcomponents; and/or a plurality of functional requirements of each component of the automated industrial process.

The transformation of the requirement artefacts, based on the meta-language syntax, can be performed by mapping a first plurality of meta-language elements to structure elements of the provided structured computer readable form of the plurality of the specifications of the appliance structure; and/or by mapping a second plurality of meta-language elements to structure elements of the provided structured computer readable form of the plurality of the functional requirements of each component. The structure elements of the requirement artefacts to be mapped to meta-language elements can be selected to preserve the semantic context of the requirement artefacts and/or to reduce an amount of data of the requirement artefacts.

The transformation, based on the meta-language syntax, can be performed successively for any object class as included in the requirement artefacts.

An example for transforming the plurality of the specifications of the appliance structure and/or the plurality of the functional requirements of each component based on the meta-language syntax can be a simple P&I diagram, consisting of a vessel VE1, a pump P1 and a valve V1.

The P&I diagram can be provided for transforming either in a codified way, e.g., YAML-format, or XML-format, or a natural language text.

The vessel VE1 includes an inlet pipe at a top of the vessel VE1, and an outlet pipe, at a bottom of the vessel VE1. The pump P1 is configured for pumping from the vessel VE1 towards the valve V1. The pump P1 is configured to pump only in one direction.

Resulting meta-language blocks of the example-P&ID are explained for each component of the P&ID. The encoding process, according to the meta-language syntax, can be started with a first component of the P&ID, with an object-type of "vessels" and continues stepwise successively to cover each object sorted by object classes of the described simple P&ID as: vessel, valves, and pumps. This simple topology described by the P&ID can be transformed using following rules. First, an introduction or definition part 310 can be drafted, which is followed by the encoded part 320, 330, 340, which is drafted following prompt engineering rules.

The introduction part 310 for the very first block, shown in figure 3, can be, for instance, a sentence, the meta-language syntax definition as introduction according to the transformed P&ID:
*"I will describe a process plant representation* as *piping and instrumentation diagram in natural language."*

Afterwards the vessel is transformed, starting with a meta-language introduction 210, which can be formulated as follows:
*"If I say "ve" followed by a number, I mean vessel. For example, vessel 1 means ve1."*

After the meta-language introduction for vessels 210, the encoded part of the P&ID is concatenated with the introduction part. The encoded part 220 can be generated based on a machine-readable representation of a P&ID drafted using a pseudo-code:

```
      print("Plant has ");
      foreach vessel:
        print(vessel.name+", ");
      print(".");
```

Which results in the following output for the simple P&ID example described above:
*"Plant has ve1."*

This can be followed by the meta-language conclusion 230, which is empty for the example of vessels.

The described encoding methodology for vessels 320 can be applied accordingly for valve elements 330. This starts with the meta-language introduction for the valves:
*"If I say "v" followed by a number, I mean valve. For example, valve 1 means v1.* "

Followed by encoded generated valve data.
*"Plant has v1."*

And an empty meta-language conclusion.

A next step of the methodology can encode pumps, describing the encoding of pumps 340.

Introduction:
*"If I say "p" followed by a number, I mean pump. For example, pump 1 means p1."*

Encoded part:
*"Plant has p1."*

For the example of the object type: pump, there is an example of a conclusion part of the meta-language, including some additional "rules" required for equipment types like the rule describing a one-way pumping nature of a pump.
*"Furthermore, pumps can only pump in one direction. P1 pumps form ve1 to v1. Pumps cannot operate in reverse direction."*

This methodology can be continued for all other equipment components of the P&ID, as provided, also including non-physical elements like process control requests and signals descriptions and signal links.

Last example describes the meta-language and generated blocks for piping connections:
*print("If I say "element name 1"-"element name 2", I mean pipe connection*
*between those elements. For example, ve1-p1 means a piped connection*
*between vessel 1 and pump 1. Plant has ")*
*foreach pipe between x and y:*
   *print(x.name*+*"-"*+*y.name*+*", ")*
*Introduction:*
*"If I say "element name 1"-"element name 2", I mean pipe connection between those elements. For example, ve1-p1 means a piped connection between vessel*
*1 and pump 1."*

This methodology can result in the following generated pseudo-code:

```
      print ("Plant has ")
      foreach pipe between x and y:
        print(x.name+"-"+y.name+", ")
      print(".")
      "Plant has ve1-p1, p1-v1,."
```

Finally, the right-most "Meta-language conclusion 350 for the P&ID" conclusion block of figure 3 is provided. It can contain P&ID specific data like generic "common" equipment relations and can also be defined for example typical "inflow" and "drain/outflow" pumps and valves. This can correspond to:
*"Ve1 outflow valve is v1. Ve1 outflow pump is p1."*

In addition, some generic rules for medium flow can be defined for the first generative artificial intelligence model, for example:
*"Medium can only flow between vessels if pump is operated and respective valves are open."*

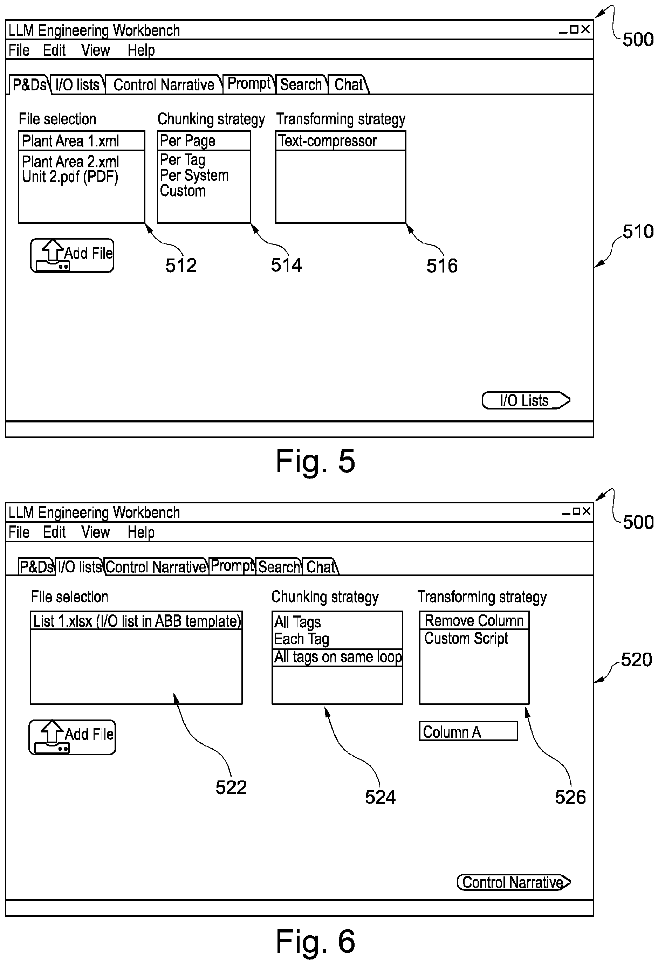

Figure 4 sketches schematically steps of the method for generating a control logic code for controlling an automated industrial process, wherein some of the steps are related to graphical user interfaces as shown by figures 5 to 10.

In a first step 410, P&ID diagrams, as a first example of requirement artefacts, are provided for processing by the method, and can be particularly supervised by an operator 110 by means of a first menu 510 of a graphical user interface 500 as depicted by figure 5.

The provided P&ID diagrams can be partitioned into a plurality of subunits, like pages, to generate a plurality of chunks of the content of the P&ID diagrams provided. Alternatively or additionally, at least a part of the plurality of chunks of the content of the P&ID diagrams are transformed into a natural language form, particularly based on a meta-language syntax, wherein a semantic content of the respective chunks of the content of the P&ID diagrams is preserved. Embeddings of this plurality of condensed chunks of content of P&ID diagrams, resulting from the partitioning and the transformation, are generated by means of an embedding encoder. The embeddings are stored in a database by means of embedding vectors, wherein the database comprises a vector database. The plurality of condensed chunks of content of P&ID diagrams are associated with the respective embedding vectors. This method is already described above.

In a further step 420, at least one I/O list, as a second example of requirement artefacts, is provided for processing by the method, and can be particularly supervised by the operator 110 by means of a second menu 520 of a graphical user interface 500 as depicted by figure 6.

The provided I/O list can be processed according to the detailed methodology, as described with respect to step 410 related to P&ID diagrams, for generating embedding vectors based on chunks of content of the at least one I/O list. The embedding vectors of the chunks of content of the at least one I/O list can be stored by means of the vector database.

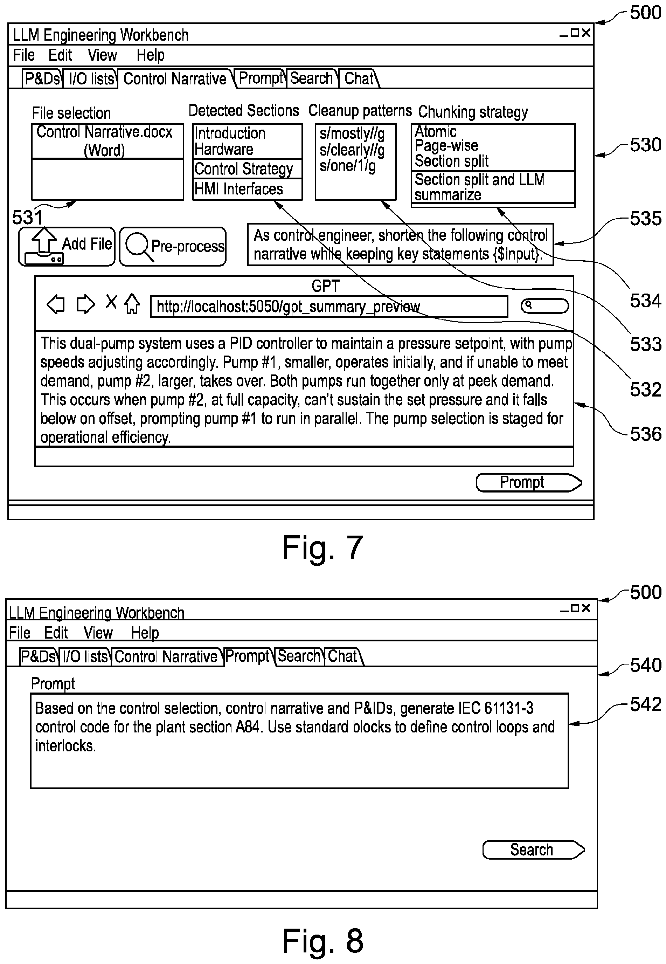

In a further step 430, control narratives, as a third example of requirement artefacts, is provided for processing by the method, and can be particularly supervised by the operator 110 by means of a third menu 530 of a graphical user interface 500 as depicted by figure 7.

The provided control narratives can be processed according to the detailed methodology, as described with respect to step 410 and step 420.

In a further step 440, further requirement artefacts, e.g., description files, etc., can be provided for processing by the method according to the detailed methodology, as described with respect to step 410 and step 420.

In a further step 450, a prompt for a first generative artificial intelligence model configured for natural language processing is generated based on the natural language form of at least parts of the requirement artefacts as provided by steps 410 to 440. The prompt is amended by a task statement to be provided to the first generative artificial intelligence model describing an expected control logic to be generated. The generation of the prompt can be particularly supervised by the operator 110 by means of a fourth menu 540 of a graphical user interface 500 as depicted by figure 8.

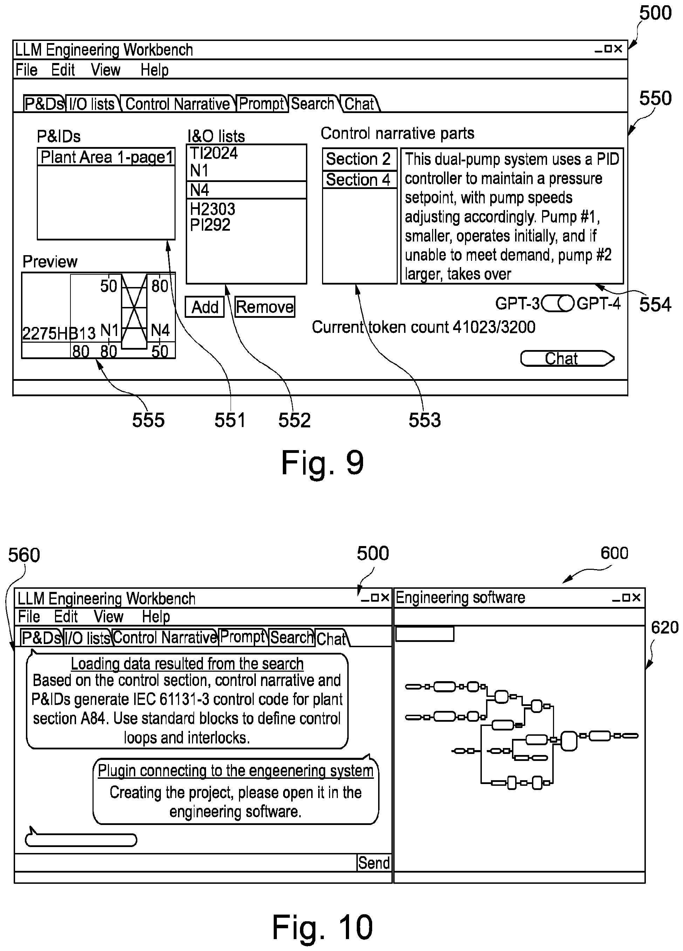

A similarity search is performed by means of the vector database and based on an embeddings of the generated prompt, to search for chunks of requirement artefacts, which are related in respect to the generated prompt. The prompt is augmented with chunks of requirements artefacts provided by the similarity search. A result of the similarity search can particularly be supervised by the operator 110 by means of a fifth menu 550 of a graphical user interface 500 as depicted by figure 9.

In a further step 452, the augmented prompt can be reviewed by the operator 110 by means of a sixth menu 560 of the graphical user interface 500, to decide in step 454, whether the augmented prompt seems to be sufficient to be provided to the first generative artificial intelligence model. In case it is not regarded as sufficient, the augmented prompt can be extended by additionally performing steps 410 to 452.

The method for generating the control logic code for controlling the automated industrial process can be performed without any operator involvement, particularly without step 452, by consecutively processing the method.

A calculation of a resulting amount of tokens can be performed in step 460, to decide whether it is below a token limit of the first generative artificial intelligence model.

In case the calculated amount of tokens exceeds the token limit, the steps of the method for generating the control logic code has to be started again, including the steps of editing and/or adjusting and/or partitioning the chunks of requirement artifacts for augmenting the prompt.

That means, in case the amount of tokens exceed the token limit the augmented prompt can be edited by additionally performing steps 410 to 452. Alternatively, the augmented prompt can be provided to a further generative artificial intelligence model, which is configured with a higher token limit.

Particularly, the operator 110 can supervise the editing and/or adjusting and/or partitioning of the chunks of requirement artifacts.

In case the amount of tokens is below the token limit, in step 470 the augmented prompt is provided to the first generative artificial intelligence model to generate the control logic code.

At step 480, the operator 110 can decide, whether the generated control logic code can fulfil the expectations using the generated control logic code for simulation and/or process control, or to start steps of editing and/or adjusting and/or partitioning the chunks of requirement artifacts for augmenting the prompt by a next iteration of performing steps 410 to 452.

The method be extended including steps to provide the operator 110 a steering of a discussion with the first generative artificial intelligence model to generate the control logic code by means of an interaction of the first generative artificial intelligence model with an engineering tool, e.g., by means of plugins, which are communicative coupled to the first generative artificial intelligence model and interface with an API of the engineering tool, wherein a graphical user interface of the engineering tool is indicated side-by-side with the graphical user interface 500, on the right-hand side of figure 10.

Figure 5 sketches an example of a menu 510 of a graphical user interface 500, which is configured to supervise the provision of requirement artefacts in respect to P&ID diagrams, enabling a selection of parts of the P&ID diagrams 512, and/or a strategy for the partitioning 514 the P&ID diagrams, and/or a selection a transforming strategy 516 for the P&ID diagrams.

Figure 6 sketches an example of a menu 520 of the graphical user interface 500, which is configured to supervise the provision of requirement artefacts in respect to I/O lists, enabling a selection of files related to I/O lists 522, and/or a strategy for the partitioning 524 of the I/O lists and/or a selection a transforming strategy 516 for the I/O lists.

Figure 7 sketches an example of a menu 530 of the graphical user interface 500, which is configured to supervise the provision of requirement artefacts in respect to control narratives, enabling a selection of files related to control narratives 531, and/or for selecting sections of requirement artefacts related to control narratives 532 and/or for selecting cleanup patterns 533 and/or a strategy for the partitioning 534 of requirement artefacts in respect to control narratives.

Cleanup patterns can, for example, be formulated in terms of regular expressions. Example content of field 533 can show a global substitution of some "parasite" words by empty strings, i.e., their removal.

Additionally, the menu 530 can include a text field 536 to display a control concept using natural language and another text field 535 to display a task statement for control logic the generation.

Figure 8 sketches an example of a menu 540 of the graphical user interface 500, which is configured to display a prompt using natural language by means of text field 542.

Figure 9 sketches an example of a graphical user interface 500, which is configured to display by means of a menu 550 a result of a similarity search performed by means of the database based on the prompt. A list box 551 can be configured to display chunks of the P&ID diagram for augmenting the prompt.

Another list box 552 of the menu 550 can be configured to display chunks of the I/O lists for augmenting the prompt. Another list box 553 can be configured to display parts of the control narrative for augmenting the prompt. Moreover, another list box 544 of the menu 550 can be configured to display at least a control concept of the control narratives. A graphical field 555 of menu 550 can be configured to display a graphical representation of the P&ID diagram. The menu 550 of the graphical user interface 500 can be configured to display a result of the calculation of an amount of tokens of the augmented prompt. In addition, the menu 550 of the graphical user interface 500 can be configured to provide a switch to select specific first generative artificial intelligence models, as e.g. GPT-3 or GPT-4.

Figure 10 sketches an example of a graphical user interface 500, which is configured to display by means of a menu 560 a chat interface for chatting of the operator 110 with the first generated artificial intelligence model. Additionally to the graphical user interface 500 a graphical user interface 600 of an engineering software can be provided to a user for providing a scheme 620 of the generated control code by means of the engineering software according to a control code programming language, as e.g., IEC 61131-3.

## Claims

1. A method (100) for generating a control logic code (134) for controlling an automated industrial process by means of at least one programmable logic controller, the method comprising:
Providing a plurality of specifications (111) of an appliance structure of the automated industrial process, comprising a plurality of components and/or subcomponents; and/or
Providing a plurality of functional requirements (111) of each component of the automated industrial process;
Transforming (121, 122, 123) the plurality of specifications (111) and/or the requirements (111) into a natural language form; wherein a semantic content of the plurality of specifications (111) and/or the requirements (111) are preserved;
Providing at least one control concept (113) related to the plurality of components and/or subcomponents for controlling the industrial process;
Generating (127) a prompt (135) for a first generative artificial intelligence model (140) configured for natural language processing based on the natural language form of at least parts of the plurality of specifications (111) of an appliance structure; and/or at least parts of the plurality of functional requirements (111) of each component of the automated industrial process; and the at least one control concept (113); and a task statement for control logic generation, for the first generative artificial intelligence model (140);
Providing the prompt (135) to the first generative artificial intelligence model (140); and
Generating the control logic code (134) for performing the automated industrial process by means of the first generative artificial intelligence model (140) based on the prompt (135) as provided.

2. The method (100) according to claim 1, wherein the plurality of specifications (111) of the appliance structure and/or the plurality of functional requirements (111) of each component are provided in a structured computer readable form.

3. The method (100) according to claim 1 or 2, comprising:
Providing a description of a meta-language syntax (200) for the plurality of specifications of the appliance structure (111) and/or the plurality of the functional requirements (111) of each component, wherein the meta-language syntax (200) is based on natural language;
Transforming (121, 122, 123) the plurality of the specifications of the appliance structure (111) and/or the plurality of the functional requirements (111) of each component into a natural language form, based on the meta-language syntax (200), wherein the semantic content of at least a part of the plurality of the specifications of the appliance structure and/or at least a part of the plurality of the functional requirements of each component are preserved.

4. The method (100) according to claim 3, wherein an amount of data of each of the plurality of the specifications (111) of the appliance structure, as transformed based on the meta-language syntax (200); and/or each of the plurality of the functional requirements (111) of each component, as transformed, based on the meta-language syntax (200), is reduced with respect to the structured computer readable form of each of the specifications (111) and/or the functional requirements (111) as provided.

5. The method according to claims 3 or 4, wherein the plurality of the specifications (111) of the appliance structure; and/or the plurality of the functional requirements (111) of each component; which are transformed (121, 122, 123) based on the meta-language (200), comprise an introduction part (210), for defining the meta-language syntax; and an encoded part (220), which is specific for the specifications (111) of the appliance structure; and/or the functional requirements (111) of each component.

6. The method (100) according to any of the claims 3 to 5, wherein the meta-language syntax (200) is configured to preserve the semantic content of the plurality of the specifications (135) of the appliance structure and/or the plurality of the functional requirements (111) of each component, by mapping the first plurality of meta language elements to structure elements of the provided structured computer readable form of the plurality of the specifications (111) of the appliance structure; and/or by mapping a second plurality of meta language elements to structure elements of the provided structured computer readable form of the plurality of the functional requirements (111) of each component.

7. The method (100) according to any of the claims 3 to 6, wherein the transformation (121, 122, 123), based on the meta-language syntax (200), is performed successively for any object class as included in the plurality of the specifications of the appliance structure (111) and/or the plurality of the functional requirements (111) of each component.

8. The method (100) according to any of the preceding claims, wherein the plurality of the specifications of the appliance structure (111); and/or the plurality of the functional requirements (111) of each component, which are transformed (121, 122, 123), based on the meta-language syntax (200); and/or which are provided in a structured computer readable form, are partitioned into a plurality of respective subunits, to generate a plurality of chunks of the plurality of the specifications (111) of the appliance structure; and/or to generate a plurality of chunks of the plurality of the functional requirements (111) of each component, whereby the respective chunks feature a corresponding smaller data size as each of the related specifications of the appliance structure; and/or each of the related functional requirements of each component, respectively.

9. The method (100) according to any of the preceding claims, wherein the plurality of specifications (111) of the appliance structure; and/or the plurality of the functional requirements (111) of each component, which are transformed (121, 122, 123), based on the meta-language syntax (200); and/or which are provided in a structured computer readable form, are compressed in respect to their data size based on a summarization, which is performed by means of a second generative artificial intelligence model configured for natural language processing.

10. The method (100) according to any of the preceding claims, wherein the prompt (135) is generated, based on a provided natural language form of a plurality of input/output descriptions (112) of at least a part of the components and/or subcomponents; and/or wherein the prompt (135) is generated, based on a provided natural language form of control narratives (113), comprising a plurality of control concepts assigned to the components and/or subcomponents for controlling the industrial process.

11. The method (100) according to any of the preceding claims, comprising
Generating (125) a first plurality of embeddings of at least parts of the plurality of the chunks of the plurality of the specifications of the appliance structure, by means of a third generative artificial intelligence model configured for natural language processing; and/or
Generating (125) a second plurality of embeddings of at least parts of the plurality of the chunks of the plurality of the functional requirements of each component, by means of a fourth generative artificial intelligence model configured for natural language processing;
Storing the first plurality of the embeddings; and/or the second plurality of the embeddings, by means of a database (126); and
Augmenting the prompt (135) for the first generative artificial intelligence model (140) configured for natural language processing, by appending or adding matching chunks of the plurality of the chunks of the specifications of the appliance structure, with an embedding of at least the one control concept (113) related to the plurality of components and/or subcomponents for controlling the industrial process; and/or by adding matching chunks of the plurality of the chunks of the functional requirements of each component, with an embedding of at least the one control concept related to the plurality of components and/or subcomponents for controlling the industrial process, wherein performing the matching is based on a similarity search performed by means of the database (125).

12. The method (100) according to any of the preceding claims, comprising:
Editing and/or amending and/or changing, performed by an operator by means of an interface:
the generation of the prompt (135) for the first generative artificial intelligence model (140); and/or
the mapping the first plurality of meta-language elements to structure elements of the provided structured computer readable form of the plurality of the specifications of the appliance structure; and/or
the mapping a second plurality of meta language elements to structure elements of the provided structured computer readable form of the plurality of the functional requirements of each component; and/or
the partitioning of the plurality of the specifications (111) of the appliance structure to generate a plurality of chunks of the plurality of the specifications of the appliance structure; and/or
the partitioning of the plurality of the functional requirements (111) of each component to generate a plurality of chunks of the plurality of the functional requirements of each component; and/or
the compression, based on a summarization, of the plurality of specifications (111) of the appliance structure; and/or
the compression, based on a summarization, of the plurality of the functional requirements (111) of each component.

13. A method for building a controller for controlling an automated industrial process, comprising;
Generating a control logic code (134) for controlling an automated industrial process by means of at least one programmable logic controller, according to any of the proceeding claims; and
Loading the control logic code (134) to a programmable logic controller.

14. A controller, comprising:
a programmable logic controller;
a database and/or a repository (150), which is coupled to the programmable logic controller;
an interface, which is signally coupled to the programmable logic controller; and wherein the interface is configured to be signally coupled to a plurality of components and/or subcomponents of an automated industrial process system; and wherein
the controller is configured to control the automatic industrial process, based a control logic code (134), which is generated by any of the methods of claim 1 to 13.

15. A coding-device for generating a control logic code (134), comprising:
a first interface, configured for receiving a plurality of specifications (111) of an appliance structure of an automated industrial process; and/or configured to receive at least one control concept (113) related to a plurality of components of the automated industrial process;
a data processing apparatus, signally coupled to the first interface;
a second interface, signally coupled to the data processing apparatus, wherein the second interface is capable to be coupled to a first generative artificial intelligence model (140) configured for natural language processing; wherein the coding-device is comprising means and/or the coding device is configured, to carry out one of the methods according to claim 1 to 13.

16. Use of a meta-language for transforming specifications (111) of the appliance structure; and/or functional requirements (111) of each component into a natural language form, wherein the semantic content of the specifications (111) of the appliance structure and/or the functional requirements (111) of each component are preserved, for generating a control logic code (134) for controlling an automated industrial process, according to any one of the claims 1 to 12.
